Europäisches Patentamt

European Patent Office

Office européen des brevets

(11) Publication number: **0 070 739**
**B1**

(12) **EUROPEAN PATENT SPECIFICATION**

(45) Date of publication of patent specification: **21.11.85**

(21) Application number: **82303844.3**

(22) Date of filing: **21.07.82**

(51) Int. Cl.⁴: **F 16 C 1/26**

(54) **Improvements relating to tubular sleeving.**

(30) Priority: **22.07.81 GB 8122644**

(43) Date of publication of application:
**26.01.83 Bulletin 83/04**

(45) Publication of the grant of the patent:
**21.11.85 Bulletin 85/47**

(84) Designated Contracting States:
**DE FR GB IT**

(56) References cited:
**DE-A-2 257 891**
**DE-U-1 880 165**
**US-A-3 240 233**
**US-A-3 581 523**
**US-A-4 112 708**

(73) Proprietor: **PARSONS CONTROLS LIMITED**
**Stourport on Severn**
**Stourport Worcestershire DY13 9AT (GB)**

(72) Inventor: **Calder, Phillip Godfrey**
**8 Cheshire Avenue Stourport on Severn**
**Stourport Worcestershire (GB)**

(74) Representative: **Lewis, David Overington**
**c/o Babcock International plc Cleveland House**
**19 St. James's Square**
**London SW1Y 4LN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to tubular sleeving and, more particularly, to tubular sleeving for cushioning cylindrical items such as flexible conduited control cables against chaffing and vibration.

It is known in connection with flexible conduit control cable assemblies, where the assembly is arranged to pass through an aperture in a plate to provide a tubular sleeving adjacent the plate to cushion the conduit portion of the assembly against chaffing against the plate at the aperture.

It is the practice to position such tubular sleeving by means of glue or by making the tubular sleeving a force fit on the conduit.

Such practices obviously take time either to apply the glue or to use relatively high force to position the sleeve on the cable so that an arrangement obviating the need for such practices speeds the assembly process.

According to the present invention the tubular sleeving is formed of soft, flexible, polyvinyl chloride with a multiplicity of inwardly directed, triangular cross-section, ribs having apices lying on a circle of diameter slightly less than the outside diameter of the conduit portion such that the ribs of the tubular sleeving are a friction fit on the conduit portion and the internal surface of the tubular sleeving is spaced from the conduit portion.

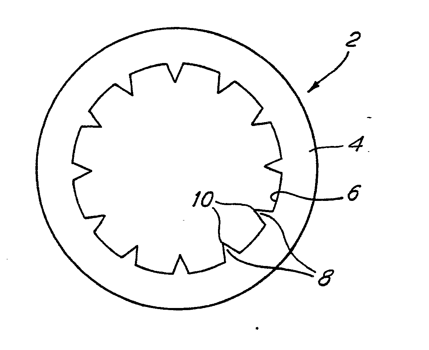

The invention will now be described, by way of example, with reference to the accompanying drawing showing, in end elevation, a sleeve 2 for a flexible, wire wound, conduit for a cable control formed from soft, flexible, polyvinyl chloride material, produced as an extruded tube 4. The internal surface 6 of the tube 4 is formed with twelve, equi-angularly spaced, ribs 8 each having a triangular cross-section with a radially inwardly directed apex 10. The internal diameter of a circle passing through the apices 10 of the ribs 8 is slightly less than the outside diameter of an associated conduit (not shown) such that the sleeve 2 is a push fit on the conduit but is retained in position on the conduit by virtue of the frictional effect between the ribs 8 and the conduit.

The dimensions of the ribs 8 both as regards radial depth and base width are determined in relation to the resilience of the sleeve material, the conduit outside diameter, the number of ribs, the force desired to be exerted to slide the sleeve onto the conduit and the forces likely to be encountered liable to displace the sleeve when once in position on the conduit.

By way of example, a sleeve for a clutch control cable for a motor vehicle was formed of soft, flexible, polyvinyl chloride. The cable had a conduit with an outside diameter of 10 millimetres and the sleeve 2 an outside diameter of 15 millimetres. Twelve, equi-angular spaced, ribs 8 were formed on the interior of the sleeve each with a triangular cross-section having a radial height of 1.1 millimetres, the radially inner apices 10 each having a 45° angle and being positioned on a circle of 9.15 millimetres diameter. In another example, a conduit with an outside diameter of 11 millimetres was provided with a sleeve 8 of an outside diameter of 20 millimetres. Twelve, equiangularly spaced, ribs 8 were formed on the interior of the sleeve each with a triangular cross-section having a radial height of 1.8 millimetres, the radially inner apices 10 each have a 45° angle and being positioned on a circle of 10.05 millimetres diameter. In both examples, the respective sleeve was manually positionable on the conduit and was retained in position on the conduit despite various chaffing effects where the sleeve passed through an aperture in a bulkhead.

It will be appreciated that the foregoing form of sleeve obviates the need either to apply glue or to use relatively high forces to position the sleeve on the cable, and therby speeds the assembly process. Furthermore, a saving in material is effected since for a given outside diameter of sleeve, by virtue of the provision of ribs, less material is required to form the sleeve. It has also been found that the provision of ribs spacing the sleeve from the cable tends to reduce transmission of noise compared with a sleeve conforming closely with the cable surfaces.

Other resilient materials, such as a natural or synthetic rubber, may, of course, be utilised to form the sleeve. The sleeves may be utilised to cushion items other than control cables.

## Claim

A flexible conduit control cable assembly arranged to pass through an aperture in a plate and provided with a tubular sleeving (2) adjacent the plate to cushion the conduit portion of the assembly against chaffing against the plate at the aperture, characterised in that the tubular sleeving (2) is formed of soft, flexible, polyvinyl chloride with a multiplicity of inwardly directed, triangular cross-section, ribs (8) having apices (10) lying on a circle of diameter slightly less than the outside diameter of the conduit portion such that the ribs of the tubular sleeving are a friction fit on the conduit portion and the internal surface (6) of the tubular sleeving is spaced from the conduit portion.

## Revendication

Assemblage de câble de commande à gaine souple agencé pour traverser un orifice ménagé dans une plaque et garni au niveau de la plaque d'un manchon tubulaire (2) destiné à matelasser la partie gaine de l'assemblage pour éviter l'usure par frottement contre la plaque au niveau de l'orifice, caractérisé en ce que le manchon tubulaire (2) est en chlorure de polyvinyle mou et souple et présente une multiplicité de nervures à section triangulaire (8), dirigées vers l'intérieur, à sommets (10) situés sur un cercle de diamètre légèrement inférieur au diamètre extérieur de la partie gaine de sorte que les nervures du manchon tubulaire sont à ajustage frottant sur la partie gaine et que la surface intérieure (6) du manchon tubulaire est espacée de la partie gaine.

**Patentanspruch**

Zusammengesetztes, biegsames Steuerleitungskabel zum Durchführen durch eine Öffnung in einer Platte und mit einem rohrförmigen Mantel (2) versehen, der in der Nähe der Platte die Leitung des zusammengesetzten Steuerleitungskabels gegen Scheuern an der Öffnung der Platte polstern soll, dadurch gekennzeichnet, daß der rohrförmige Mantel (2) aus weichem, biegsamem Polyvinylchlorid mit einer Mehrzahl von nach innen gerichteten, im Querschnitt dreieckförmigen Rippen (8) gebildet ist, deren Spitzen auf einem Kreis liegen, dessen Durchmesser ein wenig kleiner als der Außendurchmesser der Leitung ist, so daß die Rippen des rohrförmigen Mantels einen Reibungssitz auf der Leitung bilden und die Innenoberfläche (6) des rohrförmigen Mantels einen Abstand von der Leitung einhält.